# EUROPÄISCHE PATENTSCHRIFT

(11) **EP 3 751 420 B1**
(45) Veröffentlichungstag und Bekanntmachung des Hinweises auf die Patenterteilung: **22.03.2023**
(21) Anmeldenummer: 19179481.7
(22) Anmeldetag: 11.06.2019
(51) Int. Cl.: G06F 11/20, G06F 11/07, G05B 19/02, G05B 19/042

(54) **WARTBARES VERTEILTES AUSFALLSICHERES ECHTZEITCOMPUTERSYSTEM**
MAINTAINABLE DISTRIBUTED FAIL-SAFE REAL-TIME COMPUTER SYSTEM
SYSTÈME INFORMATIQUE EN TEMPS RÉEL RÉPARTI À SÉCURITÉ INTÉGRÉE POUVANT ÊTRE MAINTENU

(43) Veröffentlichungstag der Anmeldung: 16.12.2020
(73) Patentinhaber: TTTech Computertechnik Aktiengesellschaft, 1040 Wien (AT)
(72) Erfinder: Kopetz, Hermann, 2500 Baden (AT)
(74) Vertreter: Patentanwaltskanzlei Matschnig & Forsthuber OG

(56) Entgegenhaltungen:
- US-A- 4 596 012
- US-A1- 2017 192 417
- Hermann Kopetz: "Real-Time Systems - Design Principles for Distributed Embedded Applications" In: "Real-time systems series", 1. Januar 2011 (2011-01-01), Springer, XP055118674, ISBN: 978-1-44-198236-0 * Abschnitte 3.3.2, 14.2.4 und 7.5.3 *

## Beschreibung

Die Erfindung betrifft ein verteiltes wartbares Echtzeitcomputersystem gemäß dem Oberbegriff des Anspruchs 1, beispielsweise zum Steuern und/ oder Überwachen einer Anlage, wobei das Echtzeitcomputersystem mindestens zwei Zentralcomputer und einen, zwei oder mehrere, insbesondere eine Vielzahl von Peripheriecomputern, umfasst, wobei beispielsweise mit dem einen, zwei oder mehreren Peripheriecomputern die Anlage gesteuert und/oder überwacht wird, wobei insbesondere jeder Peripheriecomputer einen Teil der Anlage steuert und/oder überwacht, wobei die Zentralcomputer Zugriff auf eine *sparse globale Zeit* haben und die Zentralcomputer über identische Hardware und identische Software verfügen, aber unterschiedliche *Startupdaten* verwenden, wobei jeder funktionstüchtige Zentralcomputer entsprechend einem *a priori* in seinen *Startupdaten* festgelegten Zeitplan periodisch *time-triggered multi-cast Life-Sign-Nachrichten* an die anderen Zentralcomputer sendet, wobei die Peripheriecomputer Nachrichten mit den Zentralcomputern austauschen können, und wobei zu jedem Zeitpunkt ein Zentralcomputer im Zustand *aktiv* ist und die anderen Zentralcomputer im Zustand *nicht-aktiv* sind, und wobei, insbesondere unmittelbar, nach dem *offenbaren Ausbleiben* einer zu einem geplanten Empfangszeitpunkt erwarteten *Life-Sign-Nachricht* des *aktiven* Zentralcomputers jener *nicht-aktive funktionstüchtige* Zentralcomputer, welcher ein kürzestes *Start-up Timeout* aller *nicht-aktiven funktionstüchtigen* Zentralcomputer aufweist, die Funktion des aktiven Zentralcomputers übernimmt, und wobei jeder Zentralcomputer aus drei unabhängigen Subsystemen besteht, einem *Applikationsrechner,* einem *Speichermedium* mit den für den Zentralcomputer charakteristischen *Startupdaten* und einem *internen Monitor,* wobei der interne Monitor die *korrekte Funktion* des Applikationsrechner periodisch überprüft, und wobei nach Erkennen eines Fehlers der Monitor ein Hardware Reset und einen Wiederanlauf des Applikationsrechners anstößt, und wobei vorzugsweise der *aktive Zentralcomputer* nach einem *offensichtlichen Ausbleiben* der zu geplanten Empfangszeitpunkten erwarteten *Life-Sign-Nachrichten* von einem *nicht-aktiven* Zentralcomputer eine Wartungsaktion einleitet, die zur Reparatur oder zum Austausch eines *permanent ausgefallenen* Zentralcomputers führen kann, wobei von einem Wert eines *Indikators* abgeleitet wird, welcher der in der Software eines Zentralcomputers enthaltenen unterschiedlichen *Startupdatensätze* in diesem Zentralcomputer zum Einsatz kommt, und wobei in den time-triggered Life-Sign Nachrichten eines Zentralcomputers der Wert des Indikators, der jenen Startupdatensatz kennzeichnet, der gegenwärtig in diesem Zentralcomputer verwendet wird, enthalten ist.

Die vorliegende Erfindung liegt im Bereich der Computertechnik.

Im Bereich der *Ambient Intelligence* werden Computersysteme zur Durchführung wichtiger Aufgaben in vielen Gebäuden installiert. Zum Beispiel wird in einem Haus mit einer Solaranlage und einem Batteriespeicher das Energiemanagementwann ist die Batterie zu laden und zu entladen bzw. wann wird Energie vom Netz bezogen oder an das Netz geliefert- durch ein verteiltes Echtzeitcomputersystem durchgeführt.

Diese Echtzeitcomputersysteme müssen ausfallsicher sein und sollen einen minimalen Wartungsaufwand erfordern.

Ein verteiltes wartbares Echtzeitcomputersystem ist beispielsweise beschrieben in US 2017/192417 A1. [Kop11] beschreibt Design-Parameter für die Kommunikation in einem zeitgesteuerten Echtzeitsystem. US 4 596 012 A beschreibt die Arbitrierung zwischen redundanten Zentralcomputern in einem verteilten System.

Es ist eine Aufgabe der vorliegenden Erfindung, eine Hardware/Softwarearchitektur anzugeben, welche die Ausfallsicherheit und Wartbarkeit eines solchen verteilten Echtzeitcomputersystems sicherstellt.

Diese Aufgabe wird mit einem eingangs genannten Echtzeitcomputersystem dadurch gelöst, dass erfindungsgemäß die globale Zeit sparse ist, die Life-Sign-Nachrichten time-triggered multi-cast Life-Sign-Nachrichten sind, und die Zentralcomputer unterschiedliche Startupdaten verwenden sowie jeder Zentralcomputer ein anderes Start-up Timeout hat, wobei das *Start-up Timeout* das Zeitintervall angibt, wie lange ein Zentralcomputer nach seinem *Power* - *up* mindestens warten muss, bevor er eine erste *Life-Sign-Nachricht* senden darf, und wobei der nicht-aktive funktionstüchtige Zentralcomputer, welcher die Funktion des aktiven Zentralcomputers übernimmt, jener *nicht-aktive funktionstüchtige* Zentralcomputer ist, welcher das kürzeste *Start-up Timeout* aller *nicht-aktiven funktionstüchtigen* Zentralcomputer aufweist, und wobei von einem neu hinzugefügten Zentralcomputer nach dem Laden seiner Software mit unterschiedlichen *Startupdatensätze* die Life-Sign Nachrichten aller funktionstüchtigen Zentralcomputer empfangen werden und aus diesen Life-Sign Nachrichten abgeleitet wird, welche *Startupdatensätze* bereits in Verwendung sind, und der neu hinzugefügte Zentralcomputer seinen Indikator so setzt, dass der erste zum gegenwärtigen Zeitpunkt nicht verwendete *Startupdatensatz* im neu hinzugefügten Zentralcomputer verwendet wird.

Vorteilhafte Ausgestaltungen des erfindungsgemäßen Echtzeitcomputersystems, die alleine oder in Kombination realisiert sein können, sind im Folgenden beschrieben:
- Die Zentralcomputer können über *fail-silent* Eigenschaft verfügen.
- Der Applikationsrechner eines Zentralcomputers kann periodisch ein Life-Sign an den Monitor des Zentralcomputers senden.
- Der Monitor des Zentralcomputers kann periodisch ein Challenge-Response Protokoll zur Überprüfung der Funktionstüchtigkeit des Applikationsrechners des Zentralcomputers ausführen.
- Der aktive Zentralcomputer kann nach Auftreten eines *signifikanten Ereignisses* eine *Start-Zustandsnachricht* einer *zeitlich begrenzten Zustandsnachrichtenfolge* zu den Peripheriecomputern senden.
- Ein Peripheriecomputer kann über Sensoren verfügen, um den physikalischen Zustand einer Umgebung beobachten zu können.
- Die identische Software für alle Zentralcomputer kann mittels eines Public-Key Verfahrens kryptographisch gesichert sein.
- Nach dem *offensichtlichen* Ausbleiben der zu den geplanten Empfangszeitpunkten erwarteten Zustandsnachrichten von einem *nicht-aktiven* Zentralcomputer kann der aktive Zentralcomputer einen Ersatz oder Ersatzteile für den ausgefallenen Zentralcomputer, vorzugsweise über das Internet, bestellen.
- Die Zentralcomputer können über unabhängige Energieversorgungen verfügen, die vorzugsweise mit einer Batterie ausgestattet sind.
- Die Zentralcomputer können über eine drahtlose Ladestation mit Energie versorgt werden.
- Ein Zentralcomputer kann über redundante leitungsgebundene oder drahtlose Kommunikationskanäle, die vorzugsweise auf unterschiedlichen Übertragungstechnologien basieren, zur Kommunikation mit den anderen Zentralcomputern und/ oder den Peripheriecomputern verfügen.
- Der Zentralcomputer kann über eine Internetverbindung verfügen, über welche eine Mensch-Maschinenkommunikation mit Benutzern, z.B. unter Verwendung eines Mobile Devices, wie etwa eines *Smart Phones* oder eines *Tablets,* abgewickelt werden kann.
- Der Applikationsrechner eines Zentralcomputers kann eine Plattform zur Abarbeitung einer Vielzahl von Applikationsprogrammen (Apps) zur Steuerung der Prozessperipherie zur Verfügung stellen.
- In einer sicherheitsrelevanten Anwendung können die Peripheriecomputer und die entsprechenden Anlagenteile redundant ausgeführt sein.

Erfindungsgemäß besteht ein erfindungsgemäßes wartbares ausfallsicheres Computersystem aus zwei oder mehreren Zentralcomputer und ein, zwei oder mehr, insbesondere einer Vielzahl von Peripheriecomputern, die z.B. die Steuerung einer Prozessperipherie vornehmen. Es wird angenommen dass die Zentralcomputer Zugriff auf eine globale *sparse global time* mit bekannter Granularität haben [Kop11].

Von den mindestens zwei Zentralcomputern, die identische Hardware aufweisen, ist zu jedem Zeitpunkt ein Zentralcomputer im Zustand *aktiv* und die anderen Zentralcomputer sind im Zustand *inaktiv.*

Ein *inaktiver Zentralcomputer* kann entweder im Zustand *funktionstüchtig* oder im Zustand *ausgefallen* sein.

Ein ausgefallener inaktiver Zentralcomputer ist entweder im Zustand *transient ausgefallen* oder *permanent ausgefallen.*

Vom Standpunkt der Wartbarkeit ist die Unterscheidung zwischen *transient ausgefallen* und *permanent ausgefallen* wesentlich. In einem *transient ausgefallenen* Zentralcomputer sind die Datenstrukturen korrumpiert, jedoch funktioniert die Computer Hardware. Ein transient ausgefallener Zentralcomputer kann durch ein *Reset und einen Wiederanlauf* in den Zustand *inaktiv funktionstüchtig* überführt werden. Die Erfahrung zeigt, dass die Mehrzahl der Fehlerursachen transient ist. Ein Beispiel für eine solche transiente Fehlerursache ist ein Single Event Upset (SEU, siehe [WikSE]).

Ein *permanent* ausgefallener Computer hat eine defekte Hardware und muss ausgetauscht werden.

Der *aktive Zentralcomputer* nimmt die Steuerung einer gegebenen Anlage vor und sendet multicast Zustandsnachrichten, die den gewünschten zukünftigen Zustand der Anlage beschreiben, an die Peripheriecomputer. Eine im multicast Verfahren gesendete Nachricht wird gleichzeitig an mehrere Empfänger übertragen, wobei keiner der Empfänger die Nachricht quittiert.

Der Begriff *Anlage* umfasst alle vom Zentralcomputer zu steuernden und zu überwachenden technischen Geräte, z.B. eine *Photovoltaik Anlage,* oder eine *Einbruchsmeldeanlage.* Beispielsweise wird jeder funktionell abgeschlossene Anlagenteil wird von einem Peripheriecomputer, der mit der dazu erforderlichen Prozessperipherie ausgestattet ist, gesteuert.

Eine Zustandsnachricht beinhaltet Zustandsdaten, das sind Aussagen über den Zustand eines Systems. Der Gegensatz sind Ereignisnachrichten, die über einen Zustandswechsel informieren. Der Vorteil der Zustandsnachrichten ist deren *Idempotenz,* d.h., ein mehrfaches Empfangen einer identischen Zustandsnachricht hat die gleiche Wirkung wie das einmalige Empfangen dieser Zustandsnachricht. Dieser Vorteil ist nach Auftreten eines Fehlers wichtig, da das wiederholte Senden einer Zustandsnachricht die gleiche Wirkung hat wie das einmalige Senden der Zustandsnachricht.

Eine Zustandsnachricht ist *zeitgesteuert,* wenn der Zeitpunkt des Sendens einer Zustandsnachricht vom Fortschreiten der Zeit entsprechend einem *a priori* erstellten Zeitplan abgeleitet wird.

Die Peripheriecomputer antworten mit Zustandsnachrichten, die den aktuellen Zustand der Prozessperipherie und der Anlage beschreiben und senden diese Zustandsnachrichten im multicast Verfahren an alle funktionstüchtigen Zentralcomputer.

Jeder *funktionstüchtige* Zentralcomputer empfängt alle im multicast Verfahren gesendeten Zustandsnachrichten von allen anderen *funktionstüchtigen* Zentralcomputern und von den Peripheriecomputern und aktualisiert seinen *inneren Zustand.* So wird gewährleistet, dass alle Zentralcomputer immer über den gleichen inneren Zustand verfügen.

Der innere Zustand eines Zentralcomputers ist eine Datenstruktur, in der die aktuellen Werte der relevanten Zustandsvariablen der Anlage und des verteilten Computersystems enthalten sind. Zum Beispiel ist der Zustand der *Eingangstür eines Hauses-verriegelt* oder *nicht verriegelt-* in einer Zustandsvariablen mit den Werten 1 oder 0 abgebildet.

Die mindestens zwei Zentralcomputer verfügen über identische Hardware und identische Software, aber über unterschiedliche *Startupdaten.* Die *Startupdaten* beinhalten die unterschiedlichen *Zeitpläne* - *z.B.,* wann ein Zentralcomputer eine zeitgesteuerte Nachricht senden muss oder empfangen soll- und ein den Zentralcomputer charakterisierendes *Start-up Timeout.* Das *Start-up Timeout* gibt das Zeitintervall an, wie lange ein Zentralcomputer nach dem *Power* - *up* mindestens warten muss, bevor er eine erste *Life-Sign-Nachricht* senden darf. Jeder Zentralcomputer hat ein anderes Start-up Timeout.

Ein Zentralcomputer beinhaltet zwei unabhängige Subsysteme, einen *Applikationsrechner* und einen *internen Monitor.* Der interne Monitor überprüft periodisch die *korrekte Funktion* des Applikationsrechners. Im Falle, dass der Monitor ein Fehlverhalten des Applikationsrechners erkennt, wird der Applikationsrechner vom Monitor abgeschaltet. Anschließend veranlasst der Monitor einen Reset und den Wiederanlauf des Applikationsrechner.

Wenn zu den geplanten Empfangszeitpunkten, die in den *Startupdaten* enthalten sind, die erwarteten *Life-Sign-Nachrichten* vom aktiven Zentralcomputer *offenbar ausbleiben,* so übernimmt jener *nicht-aktive funktionstüchtige* Zentralcomputer, der das *kürzeste Start-up Timeout* aufweist, die Funktion des aktiven Zentralcomputers. Der neue aktive Zentralcomputer sendet in seiner nächsten *Life-Sign-Nachricht* diese vorgenommene Zustandsänderung an alle anderen Zentralcomputer.

Die exakte Bedeutung des Begriffes *offenbar ausbleiben* hängt von den konkreten Umgebungsbedingungen des vorhandenen Gesamtsystems ab und ist während der Inbetriebnahme eine Systems festzulegen. In einer störungsfreien Umgebung betrachtet man den aktiven Zentralcomputer als *offenbar ausgefallen,* sobald eine erwartete *Life-Sign-Nachricht* vom aktiven Zentralcomputer bei den anderen Zentralcomputern nicht eintrifft. Wenn die Umgebung störungsanfällig ist, so kann der Ausfall von einer oder mehrere *Life-Sign-Nachrichten* toleriert werden ehe der aktive Zentralcomputer als *offenbar ausgefallen* klassifiziert wird.

Wenn die erwartete zeitgesteuerte *Life-Sign-Nachricht* (oder die erwarteten Life-Sign-Nachrichten)eines inaktiven Zentralcomputers *offensichtlich* ausbleiben, so nimmt der aktive Zentralcomputer zuerst an, dass der Ausfall transient ist. Wenn nach einem a priori festgelegten *Wiederanlauftimeout* der Zentralcomputer noch immer ausgefallen bleibt, so nimmt der aktive Zentralcomputer einen permanenten Ausfall an. In diesem Fall kann der aktive Zentralcomputer einen Ersatzteil, z.B. über das Internet anfordern.

Die exakte Bedeutung des Begriffes *offensichtlich* hängt von den konkreten Umgebungsbedingungen und von dem Zeitintervall ab, das benötigt wird - das *Wiederanlauf-timeout-* um den Wiederanlauf eines Zentralcomputers zu realisieren. Erst nach dem *Wiederanlauf-timeout,* während welchem mehrfache Wiederanlaufversuch erfolglos geblieben sind, wird ein *permanenter* Ausfall angenommen. Dieses *Wiederanlauf-timeout* soll verhindern, dass eine transiente Fehlerursache in einem Zentralcomputer zu einem (nicht notwendigen) Austausch der Hardware des Zentralcomputers führt.

Im Folgenden ist die Erfindung an Hand eines in den Figuren gezeigten Beispiels näher erörtert. Dabei zeigt
Fig. 1 zwei Zentralcomputer und vier Peripheriecomputer, und
Fig. 2 den inneren Aufbau eines Zentralcomputers.

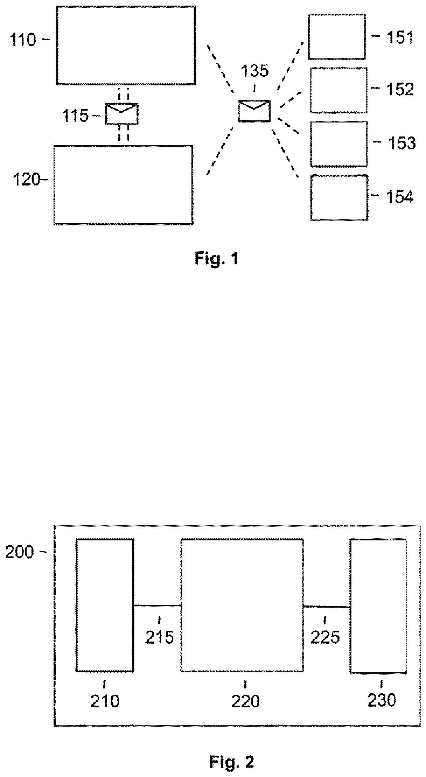

Fig. 1 zeigt beispielhaft ein wartbares Computersystem mit zwei Zentralcomputern 110, 120 und vier Peripheriecomputer 151,152,153,154.

Die beiden Zentralcomputer **110, 120** tauschen über einen Kommunikationskanal **115** periodische *zeitgesteuerte Zustandsnachrichten* aus. Diese Zustandsnachrichten haben auch die Funktion von *Life-Sign-Nachrichten.*

Der Nachrichtenaustausch kann über einen leitungsgebunden oder drahtlosen Kommunikationskanal erfolgen (z.B. über WLAN oder Bluetooth). Es ist vorteilhaft, wenn der Kommunikationskanal **115** redundant ausgelegt ist und die redundanten Kommunikationskanäle auf unterschiedlichen Datenübertragungstechnologien fußen, so dass ein Fehler in einem der beiden redundanten Kommunikationskanäle erkannt und maskiert werden kann.

Die Kommunikation zwischen den Zentralcomputern **110, 120** und den Peripheriecomputern **151, 152, 153, 154** erfolgt vorzugsweise über eine *zeitlich begrenzte Zustandsnachrichtenfolge.*

Dieser Nachrichtenaustausch bzw. diese Kommunikation kann über einen leitungsgebundenen oder drahtlosen Kommunikationskanal **135** erfolgen (z.B. über WLAN oder Bluetooth). Es ist vorteilhaft, wenn ein dafür vorgesehener Kommunikationskanal **135** redundant ausgelegt ist und die redundanten Kommunikationskanäle auf unterschiedlichen Datenübertragungstechnologien fußen, so dass ein Fehler eines der beiden redundanten Kommunikationskanäle erkannt und maskiert werden kann.

Eine *zeitlich begrenzte Zustandsnachrichtenfolge* ist eine Folge von Zustandsnachrichten, die vom aktiven Zentralcomputer, z.B. dem Zentralcomputer **110,** nach Feststellung eines *signifikanten Ereignisses* mit dem Senden einer *Start-Zustandsnachricht* an die Peripheriecomputer begonnen wird und die nach Eintreffen der letzten erwarteten *Antwort-Zustandsnachrichten* von den Peripheriecomputern terminiert.

Ein *signifikantes Ereignis* ist entweder das Auftreten eines a priori vorgegebenen *Zeit Ereignisses* (d.h. ein vorgegebener Zeitpunkt wird erreicht) oder eine vom aktiven Zentralcomputer *beobachtete Zustandsänderung* in der *Anlage* oder eine Aufforderung eines Benutzers, eine Zustandsänderung in der Anlage vorzunehmen.

In einem Datenfeld der *Start-Zustandsnachricht* ist ein beabsichtigter zukünftiger Zustand der Prozessperipherie und des angeschlossenen Anlagenteils eines oder mehrerer Peripheriecomputer enthalten.

Die angesprochenen Peripheriecomputer führen die beabsichtigte Zustandsänderung durch und antworten mit einer oder mehreren multi-cast *Antwort-Zustandsnachricht(en),* die den aktuellen Zustand der Prozessperipherie und der Anlage enthalten. Diese multi-cast *Antwort-Zustandsnachrichten* werden von allen funktionstüchtigen Zentralcomputern empfangen. Vorzugsweise, um sicherzustellen zu können, dass die beabsichtigte Wirkung in der physikalischen Umgebung des Peripheriecomputers tatsächlich eingetreten ist, verfügt der Peripheriecomputer über Sensoren (z.B. eine Kamera), mit welchen die beabsichtigte Wirkung (oder deren Ausbleiben) in der physikalischen Umgebung des Peripheriecomputers (z.B. Öffnungszustand eines Fensters) beobachtet werden kann.

Wenn innerhalb eines a priori vorgegebenen *Antwort-timeouts* die erwarteten *Antwort-Zustandsnachrichten* beim aktiven Zentralcomputer nicht eintreffen, so kann der aktive Zentralcomputer die Zustandsnachrichtenfolge mehrfach wiederholen. Wenn auch die mehrfache Wiederholung keinen Erfolg bringt oder wenn ein Fehler in der physikalischen Wirkung beobachtet wird, dann stellt der aktive Zentralcomputer einen Fehler in dem Peripheriecomputer oder der Anlage fest und gibt eine entsprechende Fehlermeldung an den Benutzer aus. Da Zustandsnachrichten *idempotent* sind, hat die Wiederholung identischer Zustandsnachrichten keine Auswirkungen auf den Zustand.

Fig. 2 zeigt den inneren Aufbau eines Zentralcomputers. Der Zentralcomputers **200** besteht aus einem Monitor **210,** einem Applikationsrechner **220,** und einem beispielsweise austauschbaren Speichermedium für Startupdaten **230.**

Die Software für den Zentralcomputer kann von einem USB Speicher oder von einer Cloud über das Internet geladen werden.

Es ist von Vorteil, wenn die Software mittels eines Public-Key Verfahrens kryptographisch gesichert ist. Der Zentralcomputer **200** ist dann in der Lage, vor einem Wiederanlauf der Software die Integrität der Software mittels eines bekannten Public Keys zu überprüfen. Der entsprechende Private Key zur Erstellung der Software ist vorzugsweise nur dem autorisierten Ersteller der Software bekannt.

Die *Startupdaten* **230** können z.B. von einem austauschbaren USB Speicher geladen werden.

Eine besteht auch die Möglichkeit, dass unterschiedliche *Startupdatensätze* für alle Zentralcomputer in der Software für die Zentralcomputer enthalten sind und es vom Wert eines *Indikators* abhängt, welcher Satz von *Startupdaten* in dem Zentralcomputer **200** verwendet werden muss.

Ein *Indikator* ist ein Hinweis, der angibt, welche Alternative aus einer gegebenen Menge von Alternativen - den unterschiedlichen *Startupdatensätzen* - ausgewählt werden muss.

Der aktuelle Wert des Indikators ist in jeder Life-Sign Nachricht eines funktionstüchtigen Zentralcomputers enthalten.

Eine Möglichkeit besteht darin, den Wert des Indikators aus der Stellung eines mechanischen Schalters am jeweiligen Zentralcomputer **200** abzuleiten.

Eine andere Möglichkeit besteht darin, den Wert des Indikators aus einer Kontaktleiste einer Ladestation für den jeweiligen Zentralcomputer **200** abzuleiten.

Eine Ladestation ist ein Gerät, vorteilhafterweise mit einer Batterie, welches die Energieversorgung des Zentralcomputers realisiert. In dem konkreten Beispiel verfügen die beiden Ladestationen für die Zentralcomputers **110, 120** dann vorzusgweise über unterschiedliche Kontaktleisten.

Eine weitere Möglichkeit besteht, darin den Wert des Indikators in der Kaltstartphase des verteilten Computersystems (unmittelbar nach Power up des Gesamtsystems) durch einen Algorithmus festzulegen, der Zufallszahlen verwendet.

Nach dem Laden der Software mit allen unterschiedlichen *Startupdatensätzen* (z.B. von der Cloud oder einem USB Speicher) werden von einem neu hinzugefügten Zentralcomputer zuerst die Life-Sign Nachrichten aller funktionstüchtigen Zentralcomputer empfangen. Aus den Life-Sign Nachrichten kann abgeleitet werden, welche *Startupdatensätze* bereits in Verwendung sind. Der Indikator wird nun im neu hinzugefügten Zentralcomputer so gesetzt, dass der erste zum gegenwärtigen Zeitpunkt nicht verwendete *Startupdatensatz* vom neu hinzugefügten Zentralcomputer verwendet wird.

Jeder funktionstüchtige Zentralcomputer sendet periodisch - entsprechend dem *ausgewählten a priori* erstellten Zeitplan, der vorzugsweise Teil der *Startupdaten* istzeitgesteuerte Zustandsnachrichten im multicast Verfahren an die anderen Zentralcomputer. Eine solche Zustandsnachricht wird als eine *Life-Sign-Nachricht* des entsprechenden sendenden Zentralcomputers interpretiert. Zeitgesteuerte *Life-Sign-Nachrichten* ermöglichen eine sehr kurze Fehlererkennungslatenz.

Wenn der funktionstüchtige inaktive Zentralcomputer mit dem kürzesten Start-up Timeout unmittelbar nach dem festgelten Empfangszeitpunkt (der in den *Startupdaten* enthalten ist) keine *Life-Sign-Nachricht* vom aktiven Zentralcomputer empfangen hat, so übernimmt er die Rolle des aktiven Zentralcomputers und sendet eine multicast *Life-Sign-Nachricht* mit dem Vermerk *aktiver Zentralcomputer* an alle anderen Zentralcomputer. Alle anderen Zentralcomputer gehen nach Power-up, nachdem sie diese *aktive Zentralcomputer Nachricht* empfangen haben, in den Zustand *inaktiv.*

Der interne Monitor **210** überprüft periodisch die *korrekte Funktion* des Applikationsrechners **220.** Diese Überprüfung kann entweder durch den Empfang eines periodischen Life-Signs des Applikationsrechners **220** durch den Monitor **210** oder durch den periodischen Anstoß eines *Challenge-Response Protokolls* durch den Monitor **210** erfolgen.

Ein *Life-Sign* ist ein periodisches Signal, das vom Applikationsrechner **220,** beispielsweise über eine Datenleitung **215,** an den Monitor **210** gesendet wird. Bleibt das Life-Sign aus, so nimmt der Monitor an, dass der Applikationsrechner **220** ausgefallen ist und veranlasst einen *Reset* und einen *Wiederanlauf* des Applikationsrechners **220.**

*Challenge-Response Protokolle zur Authentifizierung* des korrekten Verhaltens eines Computers sind in der Fachliteratur ausführlich beschrieben [WikCR]. Der Monitor **210** sendet periodisch z.B. über die Datenleitung **215** eine Challenge Nachricht mit einem variablen Startwert einer Aufgabe an den Applikationsrechner **220.** Der Applikationsrechner **220** muss innerhalb eines vorgegebenen Zeitintervalls mit der richtigen Antwort auf die Aufgabe reagieren. Im Falle, dass der Monitor ein Fehlverhalten des Applikationsrechners erkennt, veranlasst der Monitor **210** ein *Reset* und einen *Wiederanlauf* des Applikationsrechners **220.**

Es ist vorteilhaft, wenn der Zentralcomputer **200** über *fail-silent Eigenschaften* verfügt, d.h. nur richtige oder erkennbar falsche Ausgabenachrichten produziert. Eine erkennbar falsche Ausgabenachricht wird vom Empfänger verworfen. Der *Stand der Technik* lehrt, wie ein Computer mit *fail-silent* Eigenschaft gebaut werden kann (siehe [Kop11, S.130]).

Im Applikationsrechner **220** kann ein Standardbetriebssystem, wie z.B. LINUX, oder ein proprietäres Betriebssystem zum Einsatz kommen. Der Applikationsrechner **220** verfügt über einen leitungsgebundenem oder drahtlosen Kommunikationskanal (z.B. über WLAN) zum Internet und weiter zu einer Cloud zur Verarbeitung der erfassten Daten. Über diesen Kommunikationskanal kann auch die Software für den Zentralcomputer geladen werden und es können Ersatzteile für defekte Komponenten bestellt werden. Auch die Mensch-Maschinenschnittstelle des verteilten Computersystems kann mittels einer *App* (Anwendungssoftware) über das Internet mit einem Smart-Phone oder Tablet des *Benutzers* abgewickelt werden.

Der Applikationsrechner **220** stellt eine Plattform zur Ausführung einer Vielzahl von Anwendungsprogrammen (Apps) zur Steuerung der Prozessperipherie zur Verfügung. Diese Anwendungsprogramme werden z.B. in Abstimmung mit oder durch den Lieferanten der vorhandenen Peripheriecomputer und der Prozessperipherie entwickelt.

Es ist vorteilhaft, wenn die Energieversorgungen der Zentralcomputer **110, 120** voneinander unabhängig sind. Beispielsweise können die Zentralcomputer über je eine Batterie zur Pufferung der Energieversorgung verfügen.

Es ist vorteilhaft, wenn die Energieversorgung der Zentralcomputer **110, 120** über drahtlose Ladestationen erfolgt.

Es ist vorteilhaft, wenn die gesamte Datenübertragung über drahtlose Kommunikationskanäle abgewickelt wird und die Software von der Cloud geladen wird.

Es ist vorteilhaft, wenn in einer sicherheitsrelevanten Anwendung-z.B. im Bereich der Medizintechnik- auch die Peripheriecomputer und die entsprechenden Anlagenteile redundant ausgeführt werden.

Die Behebung eines Fehlers eines permanent ausgefallenen Zentralcomputers kann wie folgt ablaufen:
1. Nach dem Erkennen eines *permanent ausgefallenen* Zentralcomputers durch den aktiven Zentralcomputer erfolgt die automatische Bestellung eines neuen Zentralcomputers durch den aktiven Zentralcomputer über das Internet.
2. Auspacken des eingetroffenen Pakets und Positionierung an der vorgesehenen Stelle der Ladestation.
3. Automatisches Laden der Software von der Cloud, automatische Auswahl der *Startupdaten,* und automatischer Wiederanlauf des neuen Zentralcomputers in den Zustand *inaktiver funktionstüchtiger* Zentralcomputer.

Die einzige manuelle Handlung zur Fehlerbehebung besteht somit im *Auspacken des eingetroffenen Pakets* und der *Positionierung des neuen Zentralcomputers am vorgesehen Platz* der vorhandenen Ladestation. Eine solche einfache Fehlerbehebung benötigt kein speziell ausgebildetes Wartungspersonal, was zu erheblichen Kosteneinsparungen führt.

Da ein Zentralcomputer nach wie vor funktioniert, ist der kontinuierliche Betrieb während der Wartung gewährleistet.

Ein Fehler in einem Peripheriecomputer und der angeschlossenen Anlage wird vom aktiven Zentralcomputer festgestellt und diagnostiziert. Wenn in einer sicherheitskritischen Anwendung redundante Peripheriecomputer und redundante Anlageteile vorhanden sind, so können ein Ausfall eines Peripheriecomputers oder eines Anlagenteils toleriert werden, ohne den Betrieb der sicherheitskritischen Anwendung zu unterbrechen.

In Anbetracht der gegenwärtig hohen Wartungskosten für elektronische Systeme ist die hier offen gelegte Erfindung von großer wirtschaftlicher Bedeutung.

### Zitierte Literatur

[Kop11] Kopetz, H., Real-Time Systems. Springer Verlag. 2011
[WikCR] Wikipedia: Challenge-Response Authentication. Accessed on May 21, 2019
[WikSE]) Wikipedia: Single Event Upset. Accessed on May 21, 2019

## Patentansprüche

1. Verteiltes wartbares Echtzeitcomputersystem, beispielsweise zum Steuern und/oder Überwachen einer Anlage, wobei das Echtzeitcomputersystem mindestens zwei Zentralcomputer (110, 120; 200) und einen, zwei oder mehrere, insbesondere eine Vielzahl von Peripheriecomputern (151, 152, 153, 154), umfasst, wobei beispielsweise mit dem einen, zwei oder mehreren Peripheriecomputern die Anlage gesteuert und/oder überwacht wird, wobei insbesondere jeder Peripheriecomputer einen Teil der Anlage steuert und/oder überwacht, wobei die Zentralcomputer Zugriff auf eine *globale Zeit* haben und die Zentralcomputer über identische Hardware und identische Software verfügen und *Startupdaten* verwenden, wobei jeder funktionstüchtige Zentralcomputer entsprechend einem *a priori* in seinen *Startupdaten* festgelegten Zeitplan periodisch *Life-Sign-Nachrichten* an die anderen Zentralcomputer sendet, wobei die Peripheriecomputer (151, 152, 153, 154) Nachrichten (135) mit den Zentralcomputern (110, 120) austauschen können, und wobei zu jedem Zeitpunkt ein Zentralcomputer im Zustand *aktiv* ist und die anderen Zentralcomputer im Zustand *nicht-aktiv* sind, und wobei, insbesondere unmittelbar, nach dem *offenbaren Ausbleiben* einer zu einem geplanten Empfangszeitpunkt erwarteten *Life-Sign-Nachricht* des *aktiven* Zentralcomputers ein nicht-aktiver funktionstüchtiger Zentralcomputer die Funktion des aktiven Zentralcomputers übernimmt, und wobei jeder Zentralcomputer (110, 120; 200) aus drei unabhängigen Subsystemen besteht, einem *Applikationsrechner* (220), einem *Speichermedium* mit den für den Zentralcomputer (200) charakteristischen *Startupdaten* (230) und einem *internen Monitor* (210), wobei der interne Monitor (210) die *korrekte Funktion* des Applikationsrechner (220) periodisch überprüft, und wobei nach Erkennen eines Fehlers der Monitor (210) ein Hardware Reset und einen Wiederanlauf des Applikationsrechners (220) anstößt, und wobei vorzugsweise der *aktive Zentralcomputer* nach einem *offensichtlichen Ausbleiben* der zu geplanten Empfangszeitpunkten erwarteten *Life-Sign-Nachrichten* von einem *nicht-aktiven* Zentralcomputer eine Wartungsaktion einleitet, die zur Reparatur oder zum Austausch eines *permanent ausgefallenen* Zentralcomputers führen kann, wobei von einem Wert eines *Indikators* abgeleitet wird, welcher der in der Software eines Zentralcomputers enthaltenen unterschiedlichen *Startupdatensätze* in diesem Zentralcomputer zum Einsatz kommt, und wobei in den time-triggered Life-Sign Nachrichten eines Zentralcomputers der Wert des Indikators, der jenen Startupdatensatz kennzeichnet, der gegenwärtig in diesem Zentralcomputer verwendet wird, enthalten ist,
**dadurch gekennzeichnet, dass**
die globale Zeit sparse ist, die Life-Sign-Nachrichten time-triggered multi-cast Life-Sign-Nachrichten sind, und die Zentralcomputer unterschiedliche Startupdaten verwenden sowie jeder Zentralcomputer ein anderes Start-up Timeout hat, wobei das *Start-up Timeout* das Zeitintervall angibt, wie lange ein Zentralcomputer nach seinem *Power* - *up* mindestens warten muss, bevor er eine erste *Life-Sign-Nachricht* senden darf, und wobei der nicht-aktive funktionstüchtige Zentralcomputer, welcher die Funktion des aktiven Zentralcomputers übernimmt, jener *nicht-aktive funktionstüchtige* Zentralcomputer ist, welcher das kürzeste *Start-up Timeout* aller *nicht-aktiven funktionstüchtigen* Zentralcomputer aufweist, und wobei von einem neu hinzugefügten Zentralcomputer nach dem Laden seiner Software mit unterschiedlichen *Startupdatensätze* die Life-Sign Nachrichten aller funktionstüchtigen Zentralcomputer empfangen werden und aus diesen Life-Sign Nachrichten abgeleitet wird, welche *Startupdatensätze* bereits in Verwendung sind, und der neu hinzugefügte Zentralcomputer seinen Indikator so setzt, dass der erste zum gegenwärtigen Zeitpunkt nicht verwendete *Startupdatensatz* im neu hinzugefügten Zentralcomputer verwendet wird.

2. Echtzeitcomputersystem nach Anspruch 1, **dadurch gekennzeichnet, dass** die Zentralcomputer (110, 120; 200) über *fail-silent* Eigenschaft verfügen.

3. Echtzeitcomputersystem nach Anspruch 1 oder 2, **dadurch gekennzeichnet, dass** der Applikationsrechner (220) eines Zentralcomputers (200) periodisch ein Life-Sign an den Monitor (210) des Zentralcomputers (200) sendet.

4. Echtzeitcomputersystem nach Anspruch 1 oder 2, **dadurch gekennzeichnet, dass** der Monitor (210) eines Zentralcomputers (200) periodisch ein Challenge-Response Protokoll zur Überprüfung der Funktionstüchtigkeit des Applikationsrechners (220) des Zentralcomputers (200) ausführt.

5. Echtzeitcomputersystem nach einem der Ansprüche 1 bis 4, **dadurch gekennzeichnet, dass** der aktive Zentralcomputer nach Auftreten eines *signifikanten Ereignisses* eine *Start-Zustandsnachricht* einer *zeitlich begrenzten Zustandsnachrichtenfolge* zu den Peripheriecomputern sendet.

6. Echtzeitcomputersystem nach einem der Ansprüche 1 bis 5, **dadurch gekennzeichnet, dass** ein Peripheriecomputer über Sensoren verfügt, um den physikalischen Zustand einer Umgebung beobachten zu können.

7. Echtzeitcomputersystem nach einem der Ansprüche 1 bis 6, **dadurch gekennzeichnet, dass** die identische Software für alle Zentralcomputer (110, 120) mittels eines Public-Key Verfahrens kryptographisch gesichert ist.

8. Echtzeitcomputersystem nach einem der Ansprüche 1 bis 7, **dadurch gekennzeichnet, dass** nach dem *offensichtlichen* Ausbleiben der zu den geplanten Empfangszeitpunkten erwarteten Zustandsnachrichten von einem *nicht-aktiven* Zentralcomputer der aktive Zentralcomputer einen Ersatz oder Ersatzteile für den ausgefallenen Zentralcomputer, vorzugsweise über das Internet, bestellt.

9. Echtzeitcomputersystem nach einem der Ansprüche 1 bis 8, **dadurch gekennzeichnet, dass** die Zentralcomputer über unabhängige Energieversorgungen verfügen, die vorzugsweise mit einer Batterie ausgestattet sind.

10. Echtzeitcomputersystem nach einem der Ansprüche 1 bis 9, **dadurch gekennzeichnet, dass** die Zentralcomputer über eine drahtlose Ladestation mit Energie versorgt werden.

11. Echtzeitcomputersystem nach einem der Ansprüche 1 bis 10, **dadurch gekennzeichnet, dass** ein Zentralcomputer über redundante leitungsgebundene oder drahtlose Kommunikationskanäle, die vorzugsweise auf unterschiedlichen Übertragungstechnologien basieren, zur Kommunikation mit den anderen Zentralcomputern und/oder den Peripheriecomputern verfügt.

12. Echtzeitcomputersystem nach einem der Ansprüche 1 bis 11, **dadurch gekennzeichnet, dass** der Zentralcomputer über eine Internetverbindung verfügt, über welche eine Mensch-Maschinenkommunikation mit Benutzern, z.B. unter Verwendung eines Mobile Devices, wie etwa eines *Smart Phones* oder eines *Tablets,* abgewickelt werden kann.

## Claims

1. Distributed maintainable real-time computer system, for example for controlling and/or monitoring a plant, wherein the real-time computer system comprises at least two central computers (110, 120; 200) and one, two, or more, in particular a plurality of, peripheral computers (151, 152, 153, 154), wherein for example using the one, two, or more peripheral computers the plant is controlled and/or monitored, in particular each peripheral computer controlling and/or monitoring a part of the plant, wherein the central computers have access to a global time and the central computers are provided with identical hardware and identical software and use startup data, each functioning central computer periodically sending life-sign messages to the other central computers according to a schedule defined *a priori* in its startup data, wherein the peripheral computers (151, 152, 153, 154) are able to exchange messages (135) with the central computers (110, 120), and wherein at any time one central computer is in the active state and the other central computers are in the non-active state, and wherein after, in particular immediately after, the apparent absence of a life-sign message of the active central computer expected at a scheduled reception time, a non-active functional central computer takes over the function of the active central computer, and wherein each central computer (110, 120; 200) comprises three independent subsystems, an application computer (220), a storage medium containing startup data (230) characteristic of the central computer (200), and an internal monitor (210), wherein the internal monitor (210) periodically verifies the correct operation of the application computer (220), and wherein upon detection of a failure the monitor (210) initiates a hardware reset and restart of the application computer (220), and wherein preferably the active central computer initiates, upon an apparent failure to receive life-sign messages expected at scheduled reception times from a non-active central computer, a maintenance action that can lead to the repair or replacement of a permanently failed central computer, wherein from a value of an indicator it is derived which of the different startup data sets contained in the software of a central computer is used in this central computer, and wherein in the time-triggered life-sign messages of a central computer the value of the indicator characterizing that startup data set which is currently being used in this central computer is contained,
**characterized in that**
the global time is sparse, the life-sign messages are time-triggered multi-cast life-sign messages, and the central computers use different start-up data, and each central computer has a different start-up timeout, wherein the start-up timeout indicates the time interval of how long a central computer has to wait at least after its power-up before it is allowed to send a first life-sign message, and wherein the non-active functional central computer that takes over the function of the active central computer is the non-active functional central computer that has the shortest start-up timeout of all non-active functional central computers, and wherein from a central computer that is newly added the life-sign messages of all functional central computers are received after loading its software with different start-up data sets, and from these life-sign messages it is derived which start-up data sets are already in use, and the newly added central computer sets its indicator such that the first start-up data set not used at the current time is used in the newly added central computer.

2. Real-time computer system according to claim 1, **characterized in that** the central computers (110, 120; 200) have fail-silent property.

3. Real-time computer system according to claim 1 or 2, **characterized in that** the application computer (220) of a central computer (200) periodically sends a life-sign to the monitor (210) of the central computer (200).

4. Real-time computer system according to claim 1 or 2, **characterized in that** the monitor (210) of the central computer (200) periodically executes a challenge-response protocol for checking the operability of the application computer (220) of the central computer (200).

5. Real-time computer system according to any one of claims 1 to 4, **characterized in that** the active central computer sends, upon occurrence of a significant event, a start status-message of a time-limited status message sequence to the peripheral computers.

6. Real-time computer system according to any one of claims 1 to 5, **characterized in that** a peripheral computer has sensors to be able to observe the physical state of an environment.

7. Real-time computer system according to any one of claims 1 to 6, **characterized in that** the identical software for all central computers (110, 120) is cryptographically secured by means of a public-key method.

8. Real-time computer system according to any one of claims 1 to 7, **characterized in that** the active central computer, after the apparent failure of the status messages expected at the scheduled reception times from a non-active central computer, orders a replacement or spare parts for the failed central computer, preferably via the Internet.

9. Real-time computer system according to any of claims 1 to 8, **characterized in that** the central computers have independent power supplies, which are preferably equipped with a battery.

10. Real-time computer system according to any one of claims 1 to 9, **characterized in that** the central computers are power-supplied via a wireless charging station.

11. Real-time computer system according to any one of claims 1 to 10, **characterized in that** a central computer has redundant wired or wireless communication channels, preferably based on different transmission technologies, for communicating with the other central computers and/or the peripheral computers.

12. Real-time computer system according to any one of claims 1 to 11, **characterized in that** the central computer has an internet connection enabling conducting human-machine communication with users therethrough, e.g. using a mobile device such as a smart phone or a tablet.

## Revendications

1. Système informatique en temps réel réparti et maintenable, par exemple pour la commande et/ou la surveillance d'une installation, dans lequel le système informatique en temps réel comporte au moins deux ordinateurs centraux (110, 120 ; 200) et un, deux ou plusieurs, en particulier une pluralité d'ordinateurs périphériques (151, 152, 153, 154), l'installation étant par exemple commandée et/ou surveillée avec ledit/lesdits un, deux ou plusieurs ordinateurs périphériques, chaque ordinateur périphérique commandant et/ou surveillant en particulier une partie de l'installation, les ordinateurs centraux ayant accès à une heure globale et les ordinateurs centraux disposant d'un matériel identique et d'un logiciel identique et utilisant des données de démarrage, chaque ordinateur central fonctionnel envoyant périodiquement des messages Life-Sign aux autres ordinateurs centraux selon un calendrier défini *a priori* dans ses données de démarrage, les ordinateurs périphériques (151, 152, 153, 154) pouvant échanger des messages (135) avec les ordinateurs centraux (110, 120), et à tout moment, un ordinateur central étant dans l'état actif et les autres ordinateurs centraux étant dans l'état inactif, et après, en particulier immédiatement après, l'absence manifeste d'un message de signal de vie de l'ordinateur central actif attendu à un moment de réception prévu, un ordinateur central fonctionnel inactif prend la fonction de l'ordinateur central actif,
et dans lequel chaque ordinateur central (110, 120 ; 200) se compose de trois sous-systèmes indépendants, un ordinateur d'application (220), un support de stockage contenant les données de démarrage (230) caractéristiques de l'ordinateur central (200) et un moniteur interne (210), le moniteur interne (210) vérifiant périodiquement le fonctionnement correct de l'ordinateur d'application (220), et après détection d'une erreur, le moniteur (210) déclenchant une réinitialisation matérielle et un redémarrage de l'ordinateur d'application (220), et de préférence, l'ordinateur central actif déclenche, après une absence manifeste des messages de signal de vie attendus à des moments de réception planifiés d'un ordinateur central inactif, une action de maintenance qui peut conduire à la réparation ou au remplacement d'un ordinateur central en panne permanente, étant déduit d'une valeur d'un indicateur lequel des différents jeux de données de démarrage contenus dans le logiciel d'un ordinateur central est utilisé dans cet ordinateur central, et la valeur de l'indicateur qui caractérise le jeu de données de démarrage qui est actuellement utilisé dans cet ordinateur central étant contenue dans les messages Life-Sign déclenchés dans le temps d'un ordinateur central,
**caractérisé en ce que**
le temps global est creux, les messages Life-Sign sont des messages Life-Sign multi-cast déclenchés par le temps, et les ordinateurs centraux utilisent des données de démarrage différentes et chaque ordinateur central a un délai d'attente de démarrage différent, le délai d'attente de démarrage indiquant l'intervalle de temps minimum qu'un ordinateur central doit attendre après son activation avant de pouvoir envoyer un premier message de Life-Sign, et l'ordinateur central fonctionnel inactif qui prend la fonction de l'ordinateur central actif étant cet ordinateur central fonctionnel inactif qui présente le délai d'attente de démarrage le plus court de tous les ordinateurs centraux fonctionnels inactifs, et les messages Life-Sign de tous les ordinateurs centraux fonctionnels sont reçus par un ordinateur central nouvellement ajouté après le chargement de son logiciel avec différents ensembles de données de démarrage, et de ces messages Life-Sign étant déduit quels ensembles de données de démarrage sont déjà utilisés, et l'ordinateur central nouvellement ajouté règle son indicateur de telle sorte que le premier ensemble de données de démarrage non utilisé à l'heure actuelle soit utilisé dans l'ordinateur central nouvellement ajouté.

2. Système informatique en temps réel selon la revendication 1, **caractérisé en ce que** les ordinateurs centraux (110, 120 ; 200) disposent d'une propriété fail-silent.

3. Système informatique en temps réel selon la revendication 1 ou 2, **caractérisé en ce que** l'ordinateur d'application (220) d'un ordinateur central (200) envoie périodiquement un Life-Sign au moniteur (210) de l'ordinateur central (200).

4. Système informatique en temps réel selon la revendication 1 ou 2, **caractérisé en ce que** le moniteur (210) de l'ordinateur central (200) exécute périodiquement un protocole Challenge-Response pour vérifier le fonctionnement de l'ordinateur d'application (220) de l'ordinateur central (200).

5. Système informatique en temps réel selon l'une quelconque des revendications 1 à 4, **caractérisé en ce que** l'ordinateur central actif envoie aux ordinateurs périphériques un message d'état de démarrage d'une séquence de messages d'état limitée dans le temps après l'apparition d'un événement significatif.

6. Système informatique en temps réel selon l'une quelconque des revendications 1 à 5, **caractérisé en ce qu'**un ordinateur périphérique dispose de capteurs pour pouvoir observer l'état physique d'un environnement.

7. Système informatique en temps réel selon l'une quelconque des revendications 1 à 6, **caractérisé en ce que** le logiciel identique pour tous les ordinateurs centraux (110, 120) est sécurisé de manière cryptographique au moyen d'un procédé à clé publique.

8. Système informatique en temps réel selon l'une quelconque des revendications 1 à 7, **caractérisé en ce que**, après l'absence apparente des messages d'état attendus aux moments de réception prévus de la part d'un ordinateur central inactif, l'ordinateur central actif commande un remplacement ou des pièces de rechange pour l'ordinateur central défaillant, de préférence via Internet.

9. Système informatique en temps réel selon l'une quelconque des revendications 1 à 8, **caractérisé en ce que** les ordinateurs centraux disposent d'alimentations électriques indépendantes, de préférence équipées d'une batterie.

10. Système informatique en temps réel selon l'une quelconque des revendications 1 à 9, **caractérisé en ce que** les ordinateurs centraux sont alimentés en énergie par une station de charge sans fil.

11. Système informatique en temps réel selon l'une quelconque des revendications 1 à 10, **caractérisé en ce qu'**un ordinateur central dispose de canaux de communication redondants, filaires ou sans fil, de préférence basés sur des technologies de transmission différentes, pour communiquer avec les autres ordinateurs centraux et/ou les ordinateurs périphériques.

12. Système informatique en temps réel selon l'une quelconque des revendications 1 à 11, **caractérisé en ce que** l'ordinateur central dispose d'une connexion Internet par laquelle une communication homme-machine avec des utilisateurs peut être effectuée, par exemple en utilisant un dispositif mobile, tel qu'un téléphone intelligent ou une tablette.
